# EUROPEAN PATENT APPLICATION

(11) **EP 4 467 620 A1**
(43) Date of publication of application: **27.11.2024**
(21) Application number: 23175163.7
(22) Date of filing: 24.05.2023
(51) Int. Cl.: C09D 123/08, B05D 1/26, B05D 7/14, C09D 151/06

(54) **METHOD FOR THE EXTRUSION COATING OF A POLYMERIC MATERIAL ON A STEEL SUBSTRATE**

(71) Applicant: Henkel AG & Co. KGaA, 40589 Düsseldorf (DE)
(72) Inventor: de Zeeuw, Ard, 40593 Düsseldorf (DE); Nadendla, Eshkumar, 40699 Erkrath (DE); Schellbach, Kerstin, 40589 Düsseldorf (DE); Odink, Gerko, 6045 KW Roermond (NL)

(57) **Abstract**

The present invention pertains to a method for extrusion coating of a polymeric material, especially a thermoplastic polymeric material, on steel, tin plated steel or zinc coated steel sheets, to steel, tin plated steel or zinc coated steel sheets having a polymeric material coated thereon obtainable in such a method, and to the use of such steel, tin plated steel or zinc coated steel sheets having a polymeric material coated on at least one surface of the sheet to produce of coils or formed parts made from such coils.

## Description

The present invention pertains to a method for extrusion coating of a polymeric material, especially a thermoplastic polymeric material, on steel, tin plated steel or zinc coated steel sheets, to steel, tin plated steel or zinc coated steel sheets having a polymeric material coated thereon obtainable in such a method, and to the use of such steel, tin plated steel or zinc coated steel sheets having a polymeric material coated on at least one surface of the sheet to produce of coils or formed parts made from such coils.

Steel, tin plated steel or zinc coated steel sheets in general are usually coated so as to improve the corrosion resistance of the substrate, to protect the substrate from external influences and/or to provide a primer coating for subsequently applied paints. Steel, tin plated steel or zinc coated steel sheets, which are used in particular for producing formed metal parts, such as containers, cans, profiles and/or chassis parts, not only have to be protected against corrosion or pretreated to form a primer coating suitable for subsequently applied coatings & paints but also require to allow and sustain the shaping process or so-called sheet metal forming (SMF) process to produce the desired semi-finished product.

DE19812302 A1 discloses a method for direct extrusion of a polymeric material based on modified polypropylene on a metal sheet substrate, preferably aluminium, to confer compatibility of the as coated sheet material with a deep drawing process. While said method has proven to be less energy- and time-consuming in not requiring solvent treatment, curing, and/or waste management, there is still a need to optimize adherence of extruded coatings to steel, tin plated steel or zinc coated steel sheets.

The objective of the underlying invention consists in establishing a method for forming an extrusion coating on various steel sheet materials that confers corrosion resistance to the substrate as well as excellent properties in a subsequent metal forming (SMF) process while the corrosion resistance and paintability after the shaping process is not deteriorated.

It was now surprisingly found that a specific polymeric material when used in a method to form an extruded coating solves said objective for steel, tin plated steel or zinc coated steel sheets.

In one aspect, the present invention thus relates to a method for producing a steel, tin plated steel or zinc coated steel sheet having a polymeric material coated thereon, comprising the steps of:
i) feeding the steel, tin plated steel or zinc coated steel sheet into an extrusion coating arrangement, and
ii) extrusion coating of at least one surface of the steel, tin plated steel or zinc coated steel sheet with a polymer composition to obtain a coated metal sheet,
wherein the polymer composition in step ii) comprises at least one olefin copolymer of at least one olefin and at least one compound copolymerizable with an olefin and comprising at least one free carboxyl group, wherein the at least one olefin copolymer is present in an amount of about 2 to 99 wt.-%, preferably in an amount of about 10 to 95 wt.-%, more preferably about 20 to 80 wt.-%, still more preferably about 25 to 60 wt.-%, particularly about 30 to 60 wt.-%, based on the total weight of the polymer composition.

In another aspect, the present invention relates to a metal sheet coated with a polymeric material obtainable in a method of the present invention.

In yet another aspect, the present invention further relates to the use of a coated metal sheet obtainable in a method of the present invention to produce coils or to produce formed metal parts, preferably containers, cans, profiles, or chassis parts.

Embodiments of the present invention are described below, but the present invention is not limited thereto. It should be recognized that these embodiments are merely illustrative of the principles of the present invention. Numerous modifications and adaptations will be readily apparent to those of skill in the art without departing from the scope of the invention.

"One or more", as used herein, relates to at least one and comprises 1, 2, 3, 4, 5, 6, 7, 8, 9 or more of the referenced species. Similarly, "at least one" means one or more, i.e., 1, 2, 3, 4, 5, 6, 7, 8, 9 or more. "At least one", as used herein in relation to any component, refers to the number of chemically different molecules, i.e., to the number of different types of the referenced species, but not to the total number of molecules.

In the present specification, the terms "a" and "an" and "at least one" are the same as the term "one or more" and can be employed interchangeably.

"About", as used herein in relation to a numerical value, means said value ±10%, preferably ±5%.

All percentages given herein in relation to the compositions or formulations relate to weight % relative to the total weight of the respective composition or formula, if not explicitly stated otherwise.

In a first aspect, the present invention pertains to a method for extrusion coating of metal sheets with a polymeric composition that forms the polymeric material, preferably a thermoplastic polymeric material. The polymer composition used in the present invention comprises at least one olefin copolymer of at least one olefin and at least one compound copolymerizable with an olefin and comprising at least one free carboxyl group. The at least one olefin copolymer is present in an amount of about 2 to 99 wt.-%, for instance in an amount of 2, 3, 4, 5, 6, 7, 8, 9, 10, 11, 12, 13, 14, 15, 16, 17, 18, 19, 20, 21, 22, 23, 24, 25, 30, 35, 40, 45, 50, 55, 60, 65, 70, 75, 80, 85, 90, 95 or 99 wt.-%, preferably in an amount of about 10 to 95 wt.-%, more preferably about 20 to 80 wt.-%, still more preferably about 25 to 60 wt.-%, particularly about 30 to 60 wt.-%, based on the total weight of the polymer composition.

As the olefin, either ethylene or an α-olefin having 3 to 20 carbon atoms are preferred. Examples of the α-olefin having 3 to 20 carbon atoms include propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 9-methyl-1-decene, 11-methyl-1-dodecene, 12-ethyl-1-tetradecene and combinations thereof. The aforementioned olefinic compounds may be used alone or in combination of two or more of these. In various embodiments, the olefin is preferably ethylene.

A "compound copolymerizable with an olefin and comprising at least one free carboxyl group", in the context of the present invention, refers to a compound that can be copolymerized with an olefin so as to obtain an olefin copolymer and that comprises at least one free carboxyl group, for instance one, two or three free carboxyl groups, preferably one free carboxyl group. The term "free carboxyl group" shall encompass the acid form and in case that more than one free carboxyl group is present also the anhydride form of two free carboxyl groups which have intrinsically reacted to form the anhydride. Therefore, an anhydride group contained in a compound copolymerizable with an olefin represents two free carboxyl groups in the sense of this invention. In the context of the present invention, the term "compound copolymerizable with an olefin and comprising at least one free carboxyl group" refers to carboxyl acids, such as maleic acid, as well as acid anhydrides, such as maleic acid anhydride. In the context of the present invention, the term "compound copolymerizable with an olefin and comprising at least one free carboxyl group" includes compounds that can be grafted to a backbone comprised of olefins, such as maleic acid anhydride. Examples of compounds copolymerizable with an olefin and comprising at least one free carboxyl group include, without limitation, unsaturated carboxylic acids or anhydrides thereof and vinyl carboxylates, specifically, unsaturated carboxylic acids or anhydrides thereof, particularly selected from the group consisting of acrylic acid, methacrylic acid, and maleic acid. Thus, in various embodiments, the at least one compound copolymerizable with an olefin and comprising at least one free carboxyl group is selected from the group consisting of acrylic acid, methacrylic acid, and maleic acid, preferably from the group consisting of acrylic acid and methacrylic acid.

In various embodiments, in the present invention, preference is given olefin copolymers, wherein the amount of compound copolymerizable with an olefin and comprising at least one free carboxyl group in the olefin copolymer is in the range of about 1 to about 40 wt.-%, preferably about 2 to about 30 wt.-%, more preferably about 3 to about 25 wt.-%, for instance bur without limitation about 1, 2, 3, 4, 5, 6, 7, 8, 9, 10, 11, 12, 13, 14, 15, 16, 17, 18, 19, 20, 21, 22, 23, 24 or 25 wt.-%, based on the total weight of the olefin copolymer. Particularly, the amount of compound copolymerizable with an olefin and comprising at least one free carboxyl group in the olefin copolymer is from about 3 to about 30 wt.-%, preferably from about 5 to about 25 wt.-%, such as from about 7 to about 20 wt.-%.

Exemplary ethylene-acrylic acid (E-AA) and ethylene-methacrylic acid (E-MAA) copolymers are those available under the trademarks PRIMACOR^{™}, commercially available from The Dow Chemical Company, NUCREL^{™}, commercially available from E.I. DuPont de Nemours, and ESCOR^{™}, commercially available from ExxonMobil Chemical Company and described in U.S. Pat. Nos. 4,599,392, 4,988,781, and 5,938,437. Further non-limiting examples include polymers of the low/medium/high density ethylene/acrylic acid/acrylate copolymers and ethylene/butyl/acrylate copolymers of the Lucalen^{™} series commercially available from Lyondellbasell, the maleic acid anhydride modified low-crystalline metallocene propylene-ethylene copolymers of the Licocene^{™} series commercially available from Clariant, the ethylene terpolymers with reactive functions such as maleic anhydride or epoxide (glycidyl methacrylate) of the Lotader^{™} and Orevac^{™} series commercially available from SK Functional Polymers.

In various embodiments, it is preferred that the polymer composition used in the present invention further comprises at least one olefin homopolymer and/or at least one olefin copolymer of at least one olefin and at least one compound copolymerizable with an olefin and not comprising a free carboxyl group. In other words, the polymer composition used in the present invention may comprise a further olefinic polymer component, which, however, is different from the at least one olefin copolymer of at least one olefin and at least one compound copolymerizable with an olefin and comprising at least one free carboxyl group.

In this context, the olefin may be selected from ethylene and α-olefins having 3 to 20 carbon atoms, such as α-olefins having 4 to 12 carbon atoms, such as α-olefins having 4 to 8 carbon atoms, such as 1-butene, 1-hexene or 1-octene.

While any comonomers may be selected from non-polar components, particularly from the list of olefin monomers indicated above, any comonomer may alternatively be selected from polar comonomers copolymerizable with an olefin. As a polar comonomer, comonomers containing hydroxyl group(s), alkoxy group(s), carbonyl group(s), ether group(s) or ester group(s), or a mixture thereof, can be used. Particularly, comonomers containing ester group(s) can be used as said polar comonomer.

In various embodiments, said additional olefinic polymer component that is different from the at least one olefin copolymer of at least one olefin and at least one compound copolymerizable with an olefin and comprising at least one free carboxyl group is selected from the group consisting of ethylene homopolymers, propylene homopolymers, and mixtures of one or more ethylene homopolymers and one or more propylene homopolymers.

In various embodiments, said additional olefinic polymer component may be selected from the group consisting of low density polyethylene (LDPE) homopolymers, linear low density polyethylene (LLDPE) homopolymers, medium density polyethylene (MDPE) homopolymers, high density polyethylene (HDPE) homopolymers, high molecular weight polyethylene (PE-HMW) homopolymers, ultra-high molecular weight polyethylene (PE-UHMW) homopolymers, and polypropylene homopolymers, and mixtures thereof.

In various embodiments, said additional olefinic polymer component that is different from the at least one olefin copolymer of at least one olefin and at least one compound copolymerizable with an olefin and comprising at least one free carboxyl group generally can also be selected from copolymers. Suitable copolymers, such as a polyethylene (PE) or a polypropylene (PP) copolymer, could be a binary copolymer, i.e., the polymer contains ethylene or propylene, respectively, and one comonomer, or a terpolymer, i.e., the polymer contains ethylene or propylene, respectively, and two orthree comonomers.

Examples of suitable polyolefins that are different from the at least one olefin copolymer of at least one olefin and at least one compound copolymerizable with an olefin and comprising at least one free carboxyl group are commercially available under the trademarks Hostalen^{™} from Lyondellbasell and Lupolen^{™} from Lyondellbasell, polyethylenes commercially available under the trademarks Alathon^{™}, Dyneema^{™}, Polythen^{™}, Spectra^{™}, Trolen^{™} and Vestolen^{™}.

In various embodiments, the at least one olefinic polymer component that is different from the at least one olefin copolymer of at least one olefin and at least one compound copolymerizable with an olefin and comprising at least one free carboxyl group is present in the polymer composition in an amount of about 1 to 98 wt.-%, for instance about 1, 2, 3, 4, 5, 6, 7, 8, 9, 10, 11, 12, 13, 14, 15, 16, 17, 18, 19, 20, 21, 22, 23, 24, 25, 30, 35, 40, 45, 50, 55, 60, 65, 70, 75, 80, 85, 90, 95 or 98 wt.-%, preferably in an amount of about 3 to 90 wt.-%, more preferably about 5 to 80 wt.-%, still more preferably about 7 to 70 wt.-%, particularly about 10 to 65 wt.-%, based on the total weight of the polymer composition.

Methods to produce the aforementioned olefinic polymers are generally known in the art. Further details of the production of ethylene (co)polymers by high pressure radical polymerization can be found i.a. in the Encyclopedia of Polymer Science and Engineering, Vol. 6 (1986), pp 383-410 and Encyclopedia of Materials: Science and Technology, 2001 Elsevier Science Ltd.: "Polyethylene: High-pressure, R. Klimesch, D. Littmann and F.-O. Mähling pp. 7181-7184.

In various embodiments, the polymer composition has a *T*_{g} of at least 85 °C, preferably at least 90 °C, more preferably at least 100 °C, still more preferably at least 120 °C, particularly at least 130 °C. A *T*_{g} of at least 85 °C is preferable in terms of pasteurization compatibility, and a *T*_{g} of at least 130 °C is preferable in the context of sterilization of the resultant product. In yet another preferred embodiment the polymeric material that is extrusion coated on the steel sheet in accordance with the present invention is a thermoplast. The T_{g} of the polymer composition in the context of the underlying invention can be measured with differential scanning colorimetry (DSC) and in case the polymer composition is a blend of multiple polymeric compounds always refers to the lowest T_{g} detected and determined.

Physical characteristics of the polymer composition, such as melt viscosity, rheology, tensile strength, surface hardness, coefficient of friction, wear resistance, and crystallinity, may be further adapted and modified by incorporation of one or more additional components, examples of which include, without limitation, additives selected from the group consisting of additional polymers, tackifiers, antistatic agents, slip/mould release agents, waxes, stabilizers, antioxidants, plasticizers, nucleating agents, thixotroping agents, pigments and colorants, dyestuffs, fluorescing agents and fillers, including nanofillers. Typically, these additives may be present at less than 5 wt.-% each, more preferably less than 2 wt.-%, even more preferably less than 0.5 wt.-% each, relative to the total weight of the polymer composition.

For instance, the incorporation of one or more waxes may serve to modify the coefficient of friction. Waxes suitable for use in the present invention include paraffin waxes, microcrystalline waxes, polyethylene waxes, polypropylene waxes, by-product polyethylene waxes, Fischer-Tropsch waxes, oxidized Fischer-Tropsch waxes and functionalized waxes such as hydroxy stearamide waxes and fatty amide waxes. High density low molecular weight polyethylene waxes, by-product polyethylene waxes and Fischer-Tropsch waxes are conventionally referred to in the art as synthetic high melting point waxes. Modified waxes, including vinyl acetate modified waxes such as AC-400 (Honeywell) and MC-400 (available from Marcus Oil and Company), maleic anhydride modified waxes such as Epolene C-18 (available from Eastman Chemical) and AC-575A and AC-575P (available from Honeywell) and oxidized waxes are also useful in the practice of the invention. Callista^{®} 122, 158, 144, 435, and 152 available from Shell Lubricants, Houston, Tex.; Sasolwax C80 and Sasolwax H-1, H-4 and H-8, Fischer-Tropsch waxes available from Sasol Wax are also preferred waxes for use in the practice of the invention. Hydrogenated castor oil is also suitable for employment in this context.

Paraffin waxes that can be used in the practice of the invention include Pacemaker^{®} 30, 32, 35, 37, 40, 42, 45 & 53 available from Citgo Petroleum, Co.; Astor Okerin^{®} 236 available from Honeywell; R-7152 Paraffin Wax available from Moore & Munger; R-2540 available from Moore and Munger; and other paraffinic waxes such as those available from Sasol Wax under the product designations Sasolwax 5603, 6203 and 6805.

The microcrystalline waxes useful in the context of the present invention include those having 50 percent by weight or more cyclo or branched alkanes with a length of between 30 and 100 carbons. They are generally less crystalline than paraffin and polyethylene waxes, and have melting points of greater than about 70 °C Examples include Victory^{®} Amber Wax, a 70°C melting point wax available from Baker Petrolite Corp.; Bareco^{®} ES-796 Amber Wax, a 70 °C melt point wax available from Bareco; Besquare^{®} 175 and 195 Amber Waxes and 80 °C and 90 °C melt point microcrystalline waxes both available from Baker Petrolite Corp.; Indramic^{®} 91, a 90 °C melt point wax available from Industrial Raw Materials; and Petrowax^{®} 9508 Light, a 90 °C melt point wax available from Petrowax. Other examples of microcrystalline waxes are Sasolwax 3971 available from Sasol Wax and Microwax K4001 available from Alfred Kochem GmBH.

Exemplary high density low molecular weight polyethylene waxes falling within this category include ethylene homopolymers available from Backer Petrolite Corp. as Polywax^{™} 500, Polywax^{™} 1500 and Polywax^{™} 2000. Polywax^{™} 2000 has a molecular weight of approximately 2000, an Mw/Mn of approximately 1.0, a density at 16 °C of about 0.97 g/cm³, and a melting point of approximately 126 °C.

Incorporation of one or more polyorganosiloxanes may improve wear resistance of the resultant coating, particularly silanol-terminated polydialkylsiloxanes as well as end-capped polyorganosiloxanes. Non-limiting examples of commercially available polyorganosiloxanes suitable for employment in the context of the present invention include.

Stabilizers and/or antioxidants may be added to protect the polymer composition from degradation caused by reaction with oxygen induced by such things as heat or light.

Among the applicable stabilizers or antioxidants suitable, high molecular weight hindered phenols and multifunctional phenols such as sulfur and phosphorous-containing phenol may be mentioned. Hindered phenols are well known to those skilled in the art and may be characterized as phenolic compounds which also contain sterically bulky radicals in close proximity to the phenolic hydroxyl group thereof. In particular, tertiary butyl groups generally are substituted onto the benzene ring in at least one of the ortho positions relative to the phenolic hydroxyl group. The presence of these sterically bulky substituted radicals in the vicinity of the hydroxyl group serves to retard its stretching frequency, and correspondingly, its reactivity; this hindrance thus providing the phenolic compound with its stabilizing properties. Representative hindered phenols include; 1,3,5-trimethyl-2,4,6-tris-(3,5-di-tert-butyl-4-hydroxybenzyl)-benzene; pentaerythrityl tetrakis-3(3,5-di-tert-butyl-4-hydroxyphenyl)-propionate; n-octadecyl-3(3,5-di-tert-butyl-4-hydroxyphenyl)-propionate; 4,4'-methylenebis(2,6-tert-butyl-phenol); 4,4'-thiobis(6-tert-butyl-o-cresol); 2,6-di-tertbutylphenol; 6-(4-hydroxyphenoxy)-2,4-bis(n-octyl-thio)-1,3,5 triazine; di-n-octylthio)ethyl 3,5-di-tert-butyl-4-hydroxy-benzoate; and sorbitol hexa[3-(3,5-d i-tert-butyl-4-hydroxy-phenyl)-propionate].

The performance of these antioxidants may be further enhanced by utilizing, in conjunction therewith, known synergists such as, for example, thiodipropionate esters and phosphites. Distearylthiodipropionate is particularly useful.

Such antioxidants are commercially available from Ciba Specialty Chemicals and include Irganox^{®} 565, 1010, 1076 and 1726 which are hindered phenols. These are primary antioxidants which act as radical scavengers and may be used alone or in combination with other antioxidants such as phosphite antioxidants like Irgafos^{®} 168 available from Ciba Specialty Chemicals. Phosphite catalysts are considered secondary catalysts and are not generally used alone. These are primarily used as peroxide decomposers. Other available catalysts are Cyanox^{®} LTDP available from Cytec Industries and Ethanox^{®} 330 available from Albemarle Corp. Many such antioxidants are available either to be used alone or in combination with other such antioxidants.

Filler suitable for employment in the context of the present invention are generally known in the art, may be categorized as organic and mineral fillers, non-limiting examples of which include silicates, talc, calcium carbonates, clays and carbon black. For instance, the use of layered silicates allows for adjustment of mechanical strength of the coating, which allows for tailoring of processing and final end-use properties.

An especially suitable and thus preferred polymer composition used in the present invention that confers high adhesive strength of the coating when applied to a steel, tin plated steel or zinc coated steel sheet, comprises or consist of
i) in total at least 30 wt.-% relative to the total weight of the polymer composition of one or more olefin copolymers comprising a compound copolymerizable with an olefin and comprising at least one free carboxyl group, preferably selected from ethylene-acrylic acid (E-AA) and ethylene-methacrylic acid (E-MAA) copolymers, wherein the amount of said copolymerizable compound ranges from 3-30 wt.-%, preferably from 5 - 25 wt.-%, more preferably from 7 - 20 wt.-%, each based on the total weight of the olefin copolymer;
ii) in total at least 10 wt.-%, preferably at least 30 wt.-%, more preferably at least 40 wt.-%, but not more than 70 wt.-% relative to the total weight of the polymer composition of one or more olefin homopolymers and/or one or more olefin copolymers of at least one olefin and at least one compound copolymerizable with an olefin and not comprising a free carboxyl group, preferably selected from ethylene homopolymers, propylene homopolymers, and mixtures of one or more ethylene homopolymers and one or more propylene homopolymer, especially preferably selected from high density polyethylene (HDPE) homopolymers; and
iii) in total less than 20 wt.-%, preferably less than 15 wt.-% relative to the total weight of the polymer composition of additives different from compounds i) and ii) wherein preferably each additive is present in an amount of less than 5 wt.-%, more preferably less than 2 wt.-%, relative to the total weight of the polymer composition.

The metal sheet in the context of the present invention is a steel, tin plated steel or zinc coated steel sheet. The polymeric composition can be successfully extrusion coated to electro-galvanized steel, hot-dip galvanized (Z) steel, hot-dip zinc-iron (ZF) coated steel, hot-dip zinc-magnesium (ZM) coated steel and/or hot-dip zinc-aluminium (ZA) coated steel which are thus zinc coated steel sheets especially preferred in the context of the present invention.

In various embodiments, the metal sheet may be pre-heated prior to step i) of the present invention. Pre-heating the metal sheet may improve adhesion of polymer composition which is extruded thereon. For instance, the metals sheet may be heated to a temperature of about 30, 40, 50, 60, 70, 80, 90, 100, 110, 120, 130, 140, 150, 160 or 170 °C.

The polymer composition may be applied to only one surface of the metal sheet or more than just one surface of the metal sheet. If more than just one surface of the metal sheet is to be coated with a polymer composition, this may be realized *via* unilateral or bilateral extrusion application.

The advantageous physical properties of the polymer composition used in the present invention allow for extrusion application thereof onto the surface of the metal sheet in the form of a continuous film covering the entire breadth of a metal sheet fed into and passing through the extrusion arrangement, and obviating the need for distribution of the coating composition by means of rolls or the like. This altogether speeds up the entire process and allows for a more time-, energy- and resource-efficient coating process.

Once the polymer composition of the present invention is extrusion applied onto at least one surface of the metal sheet, the coated metal sheet may be cooled, for instance using air- and/or a water-based cooling system. Thus, in various embodiments, the method of the present invention comprises a step iii) of cooling the coated metal sheet. Prior thereto or alternatively, the coated metal sheet obtained after step ii) of the present invention may, according to some embodiments, be heated to a temperature of more than 10 or 20 °C, preferably more than 30 °C above the melting point of the polymer composition directly after extrusion application of the polymer composition onto the surface of the metal sheet for a period of about 0.5 to 10 seconds, particularly 0.5 to 3 seconds, which results in an optimised adhesion of the coating to the metal sheet and overall relaxing of the extruded coating.

According to preferred embodiments, the resultant coating has a thickness of about 0.2-200 µm, preferably 0.2-30 µm, more preferably about 0.5-20 µm, even more preferably about 1-15 µm, such as about 2, 3, 4, 5, 6, 7, 8, 9, 10, 11 or 12 µm.

Moreover, according to various embodiments, the method of the present invention further comprises a step of subjecting the metal sheet to a pre-treatment process prior to step i), preferably a chromium-free pre-treatment process.

In various embodiments, the method of the present invention preferably does not comprise the application of an adhesion layer prior to step ii) or an additional and different polymeric material coextruded with the polymer composition in step ii). In various further embodiments, the method of the present invention preferably does not comprise a step of pre-treating the metal sheet prior to step i).

It is understood that all embodiments disclosed herein in relation to the compositions, methods, and uses of the invention are similarly applicable to articles formed therefrom/thereby, insofar applicable, and *vice versa.*

Thus, according to a further aspect, the present invention also relates to a coated metal sheet obtainable in a method as herein described.

In yet another aspect, the present invention relates to the use of a coated metal sheet of the present invention to produce coils or formed metal parts, preferably containers, cans, profiles, or chassis parts.

## Claims

1. Method for producing a steel, tin plated steel or zinc coated steel sheet having a polymeric material coated thereon, comprising the steps of:
i) feeding the steel, tin plated steel or zinc coated steel sheet into an extrusion coating arrangement, and
ii) extrusion coating of at least one surface of the steel, tin plated steel or zinc coated steel sheet with a polymer composition to obtain a coated metal sheet,
**characterized in that**, the polymer composition in step ii) comprises at least one olefin copolymer of at least one olefin and at least one compound copolymerizable with an olefin and comprising at least one free carboxyl group, wherein the at least one olefin copolymer is present in an amount of about 2 to 99 wt.-%, preferably in an amount of about 10 to 95 wt.-%, more preferably in an amount of about 20 to 80 wt.-%, still more preferably in an amount of about 25 to 60 wt.-%, particularly in an amount of about 30 to 60 wt.-%, based on the total weight of the polymer composition.

2. The method according to claim 1, wherein the amount of compound copolymerizable with an olefin and comprising at least one free carboxyl group in the olefin copolymer comprised in the polymer composition in step ii) is in the range of about 1 to about 40 wt.-%, preferably about 2 to about 30 wt.-%, more preferably about 3 to about 25 wt.-%, based on the total weight of the olefin copolymer.

3. The method according to any one of the claims 1 or 2, wherein the polymer composition in step ii) further comprises at least one olefin homopolymer and/or at least one olefin copolymer of at least one olefin and at least one compound copolymerizable with an olefin and not comprising a free carboxyl group.

4. The method according to claim 3, comprising at least one olefin homopolymer and/or at least one olefin copolymer of at least one olefin and at least one compound copolymerizable with an olefin and not comprising a free carboxyl group selected from the group consisting of ethylene homopolymers or copolymers, propylene homopolymers or copolymers, and mixtures of one or more ethylene homopolymers and/or copolymers and one or more propylene homopolymers and/or copolymers.

5. The method according to claim 4, comprising at least one propylene homopolymer and/or at least one ethylene homopolymer selected from the group consisting of low density polyethylene (LDPE) homopolymers, linear low density polyethylene (LLDPE) homopolymers, medium density polyethylene (MDPE) homopolymers, high density polyethylene (HDPE) homopolymers, high molecular weight polyethylene (PE-HMWj homopolymers, ultra-high molecular weight polyethylene (PE-UHMW) homopolymers, and mixtures thereof.

6. The method according to any one of the preceding claims wherein the polymer composition in step ii) comprises
a) in total at least 30 wt.-% relative to the total weight of the polymer composition of one or more olefin copolymers comprising a compound copolymerizable with an olefin and comprising at least one free carboxyl group, wherein the amount of said copolymerizable compound ranges from 3-30 wt.-% based on the total weight of the olefin copolymer;
b) in total at least 10 wt.-%, but in total not more than 70 wt.-% relative to the total weight of the polymer composition of one or more olefin homopolymers and/or one or more olefin copolymers of at least one olefin and at least one compound copolymerizable with an olefin and not comprising a free carboxyl group; and
c) in total less than 20 wt.-% relative to the total weight of the polymer composition of additives different from compounds a) and b) wherein preferably each additive is present in an amount of less than 5 wt.-% relative to the total weight of the polymer composition.

7. The method according to any one of the preceding claims, wherein the polymer composition in step ii) has a *T*_{g} of at least 85 °C, preferably at least 90 °C, more preferably at least 100 °C, still more preferably at least 120 °C, particularly at least 130 °C.

8. The method according to any one of the preceding claims, wherein the polymeric material is a thermoplast.

9. The method according to one or more of the preceding claims, wherein the steel, tin plated steel or zinc coated steel sheet is selected from electro-galvanized steel, hot-dip galvanized (Z) steel, hot-dip zinc-iron (ZF) coated steel, hot-dip zinc-magnesium (ZM) coated steel and/or hot-dip zinc-aluminium (ZA) coated steel.

10. The method according to one or more of the preceding claims, wherein the method comprises a step iii) of cooling the steel, tin plated steel or zinc coated steel sheet having a polymeric material, preferably a thermoplastic polymeric material, coated thereon.

11. The method according to one or more of the preceding claims, wherein the coating has a thickness of about 0.2-30 µm, preferably about 0.5-20 µm, more preferably about 1-15 µm, still more preferably 2-12 µm.

12. The method according to one or more of the preceding claims, wherein the method further comprises a step of subjecting the zinc-coated steel sheet to a pre-treatment process prior to step i), preferably a chromium-free pre-treatment process.

13. The method according to one or more of the preceding claims, wherein the method
- does not comprise the application of an adhesion layer prior to step ii);
- does not comprise the co-extrusion of an additional polymeric material different from the polymer composition of claim 1 during step ii); and/or
- does not comprise a step of pre-treating the metal sheet prior to step i).

14. Steel, tin plated steel or zinc coated steel sheet having a polymeric material, preferably a thermoplastic polymeric material, coated on at least one surface of the sheet obtainable in a method according to any one of claims 1 to 13.

15. Use of a steel, tin plated steel or zinc coated steel sheet according to claim 14 to produce coils or formed metal parts, preferably containers, cans, profiles, or chassis parts.
